# EUROPEAN PATENT SPECIFICATION

(11) **EP 4 075 997 B1**
(45) Date of publication and mention of the grant of the patent: **02.09.2026**
(21) Application number: 20848792.6
(22) Date of filing: 18.12.2020
(51) Int. Cl.: A23F 5/26, A23F 5/28

(54) **A PROCESS TO PREPARE A LIQUID COFFEE CONCENTRATE WITH REDUCED ACRYLAMIDE CONTENT BY TREATMENT WITH A SELECTIVELY PERMEABLE MEMBRANE**
VERFAHREN ZUR HERSTELLUNG EINES FLÜSSIGEN KAFFEEKONZENTRATS MIT REDUZIERTEM ACRYLAMIDGEHALT DURCH BEHANDLUNG MIT EINER SELEKTIV PERMEABLEN MEMBRAN
PROCÉDÉ DE PRÉPARATION D'UN CONCENTRÉ DE CAFÉ LIQUIDE À TENEUR RÉDUITE EN ACRYLAMIDE PAR TRAITEMENT AVEC UNE MEMBRANE SÉLECTIVEMENT PERMÉABLE

(30) Priority: 20.12.2019 GB 201919068
(43) Date of publication of application: 26.10.2022
(73) Proprietor: Koninklijke Douwe Egberts B.V., 3532 AD Utrecht (NL)
(72) Inventor: ORDÓÑEZ, Eva Espino, 3532 AD Utrecht (NL); GORDON, Alexandra Kelly, Banbury, Oxfordshire OX16 2QU (GB); BROWN, Ian, Banbury, Oxfordshire OX16 2QU (GB); HENSON, Sian, Banbury, Oxfordshire OX16 2QU (GB)
(74) Representative: Boult Wade Tennant LLP
(86) International application number: PCT/EP2020/087020
(87) International publication number: WO 2021/123163

(56) References cited:
- EP-A1- 3 254 568
- WO-A1-2007/043873
- WO-A1-2017/211987
- US-A1- 2014 147 562
- LANXESS: "Product information LEWATIT AF5", 13 October 2011 (2011-10-13), pages 1 - 4, XP055793537, Retrieved from the Internet <URL:https://www.lenntech.com/Data-sheets/Lewatit-AF-5-L.pdf> [retrieved on 20210408]

## Description

The present invention relates to a process for producing a liquid coffee concentrate that has a reduced acrylamide content. The process involves contacting a low aromatic aqueous coffee extract with a selectively-permeable membrane to reduce the acrylamide content of the extract, prior to combining the treated extract with a high aromatic aqueous coffee extract. A liquid coffee concentrate with reduced acrylamide content produced in accordance with the processes disclosed herein is also disclosed.

The invention further provides a soluble coffee prepared by freeze or spray drying the liquid coffee concentrate with reduced acrylamide content. Finally, the invention provides a use of a selectively-permeable membrane for reducing the acrylamide content of a low aromatic aqueous coffee extract.

The extraction of roast and ground coffee with water to obtain a high coffee-solids liquid coffee concentrate is well known. Moreover, it is well known to dry such a concentrate with spray- or freeze-drying to obtain a soluble beverage product. The liquid coffee concentrate and the soluble beverage product can then be reconstituted at the consumer's convenience with hot water to obtain a coffee beverage. The industrial production of liquid coffee concentrates is associated with higher temperatures and pressures than coffee shop brewing systems. This allows a higher yield to be obtained from the beans and hence a higher profitability, but has a side-effect that the coffee can adopt undesirable processing flavour notes.

More recently it has been discovered that food products that are subjected to high temperatures during processing often contain high levels of acrylamide. For example, it has been found that the highest amount of acrylamide is formed in coffee beans during the first minutes of the roasting process. Since acrylamide is a potentially carcinogenic substance, the food industry is required to comply with efforts to reduce the levels of acrylamide in food. It is therefore desirable to implement measures to reduce the levels of acrylamide that accumulate during the coffee production.

US 2014/147562 relates to a process for the production of a liquid coffee concentrate that has an improved storage stability at ambient temperature. The process comprises separating coffee extract resulting in a high aromatic coffee extract and a low aromatic coffee extract and subjecting the low aromatic coffee extract to a heat treatment and, optionally, a pH rising step. WO 2017/211987 relates to a nitrogen infused soluble cold brew instant coffee and processes for its preparation.

EP0363529 discloses a method for obtaining an increased yield when obtaining a coffee extract from roasted and ground coffee beans. In particular, the method focuses on the hydrolysis of a partially extracted coffee under high temperatures in short processing times. WO2013/005145 discloses a method for reducing the content of acrylamide in a roasted coffee comprising reducing the asparagine content and reducing the aspartic acid content in an unroasted coffee. WO2017/004715 discloses development of an asparagine-reducing yeast by adaptive evolution and uses thereof to reduce acrylamide formation.

The reduction of acrylamide in coffee can be achieved by reducing or eliminating the levels of asparagine, a precursor required for the formation of acrylamide. US7220440 describes such a method of reducing the level of asparagine in unroasted coffee beans comprising adding an asparagine-reducing enzyme, for example asparaginase, to the unroasted coffee beans. This reduces the level of asparagine with a subsequent reduction in acrylamide formation upon roasting. The method utilises an enzymatic treatment of the unroasted coffee beans. However, the method typically results in 'off-flavours', which can have a negative impact on the overall aroma and flavour profile of the final coffee product. Furthermore, un-immobilised enzymes may be inadvertently and impermissibly retained in the final coffee product.

More recently, it has been shown that acrylamide can be removed directly from coffee extracts obtained from the roasted beans. EP3254568 describes the use of an adsorbent resin for reducing acrylamide in a liquid coffee extract or soluble coffee. In this method, a liquid coffee extract is flowed over a bed of cationic adsorbent resin to achieve a reduction in acrylamide content. This method avoids some of the issues associated with enzyme activity on the unroasted beans. However, the production of coffee having a specific aroma and flavour profile is a precise and complex process, and any additional treatment step can adversely affect the properties of the final coffee product. Therefore, treatment of the liquid extract with an adsorbent resin can alter the aroma components present in the extract, and consequently may negatively affect the taste of the final coffee product.

Accordingly, it is desirable to provide an improved process for making a liquid coffee concentrate or soluble coffee, improved coffee products and/or to tackle at least some of the problems associated with the prior art or, at least, to provide a commercially viable alternative thereto. Therefore, it is an object of the present invention to provide a process of producing a liquid coffee concentrate or soluble coffee with a reduced acrylamide content that has a lower impact on the aroma and flavour profile of the final coffee product compared to the prior art.

The present inventors have identified that acrylamide reduction can be performed at various stages of the extraction process. In particular, the inventors have found that aroma and flavour losses can be reduced by performing acrylamide reduction on a coffee extract that has a significant acrylamide content but importantly has few aroma components. The process involves obtaining a high aroma extract from roasted and ground coffee by an aroma recovery process, such that volatile flavour components are preserved. Extraction is then performed on the pre-extracted roasted and ground coffee to produce a low aromatic aqueous coffee extract. Acrylamide reduction is carried out on this low aromatic extract only. Consequently, the acrylamide reduction step has a lower impact on the overall aroma and flavour profile of the total extract compared to the prior art. Once treated, the low aromatic coffee extract may be combined with the preserved aroma and flavour components in the high aromatic extract to produce a liquid coffee concentrate.

The present invention has a number of advantages over prior art methods as will become apparent from the discussion below. One advantage of the present process is that the resultant coffee concentrate has a reduced level of acrylamide whilst the impact on the aroma and flavour profile of the final product is lower than that observed in the prior art. In particular, by subjecting only the low aromatic extract to the acrylamide reduction step, only a percentage of the total extract is treated, and therefore there is less interference with the properties of the final coffee product. Furthermore, by recovering the aroma components prior to performing the acrylamide reduction step, the majority of the desirable aromatic compounds are preserved and therefore acrylamide can be removed with a lower impact on the quality of the resultant coffee product compared to the prior art.

In a first aspect, the present invention provides a process for producing a liquid coffee concentrate, the process comprising the steps of:
a) providing a low aromatic aqueous coffee extract having a first acrylamide content;
b) providing a high aromatic aqueous coffee extract;
c) contacting the low aromatic aqueous coffee extract with a selectively-permeable membrane to provide a low aromatic aqueous coffee extract having a second acrylamide content; and
d) combining the low aromatic aqueous coffee extract having a second acrylamide content and the high aromatic aqueous coffee extract to provide a liquid coffee concentrate,
wherein the second acrylamide content is lower than the first acrylamide content.

By a "liquid coffee concentrate" it is meant a concentrated solution comprising soluble coffee solids, suitable for dilution to obtain a coffee beverage of conventional solids levels. Liquid coffee concentrates are often sold as so-called bag-in-box products for dilution in vending machines to obtain coffee beverages. A liquid coffee concentrate comprises 6 to 80% wt coffee solids preferable 10 to 65% wt more 15 to 50%wt coffee solids.

An "aqueous coffee extract" is a solution comprising soluble coffee compounds. These are obtained by contacting roast and ground coffee beans, with water, typically hot water or steam. Depending on the temperature and pressure used for the extraction, the yield of soluble coffee compounds obtained from the roast and ground coffee will vary. High temperatures result in high yields, hydrolysing complex carbohydrates in the roast and ground coffee into soluble components. While high yields are obviously desirable for commercial production, they also result in the production of undesirable flavours and in the extraction of acrylamide.

The "low aromatic aqueous coffee extract" may be characterised based on the chemical components present in the extract. For example, a low aromatic aqueous coffee extract may be considered one which has a ratio of 2, 3 butanedione to ethylguaiacol of less than 30:1. This extract is often called secondary extract. Similarly, the high aromatic aqueous coffee extract may be characterised based on a ratio of 2, 3 butanedione to ethylguaiacol of more than 30:1. Preferably the ratio of 2, 3 butanedione to ethylguaiacol in the low aromatic extract is at most half that in the high aromatic extract (e.g. 20:1 in the low aromatic extract compared to 40:1 in the high aromatic extract), more preferably at most one third, more preferably at most one quarter.

Preferably the low aromatic aqueous coffee extract having a first acrylamide content is obtained by the aqueous extraction of dearomatised roasted and ground coffee. By "dearomatised roasted and ground coffee" it is meant that the roasted and ground coffee has been previously subjected to at least one primary extraction step, such as an extraction in water at a temperature of from 100-170°C, preferably 120-150°C. Alternatively or in addition, the dearomatised roasted and ground coffee can be obtained by subjecting roasted and ground coffee to an aroma recovery process, such as one involving contacting the roasted and ground coffee with steam. Such an aroma recovery process provides a high aromatic aqueous coffee extract from the steam. Dearomatised roasted and ground coffee is also produced in the aroma recovery process.

Preferably the low aromatic aqueous coffee extract having a first acrylamide content is obtained by aqueous extraction of the dearomatised roasted and ground coffee whereby the aqueous extraction is conducted at a temperature of from 140- 230°C, preferably 160-200°C, preferably 160-195°C. If the coffee has already been subjected to a primary extraction step then this will be considered a secondary coffee extract. The dwell times at such temperatures are typically from 1 minute to 30 minutes. The resulting dearomatised roasted and ground coffee is often called "spent coffee".

In more preferred embodiments, the aqueous extraction is conducted at a temperature of above 200°C, preferably from 200 to 260°C, preferably 210-230°C, using spent coffee providing the low aromatic aqueous tertiary coffee extract. That is, because the extraction is performed on the spent coffee resulting from a secondary extraction step, it would be considered a tertiary extract. As will be appreciated, each of the primary, secondary and tertiary steps involves harsher extraction conditions. In certain embodiments, the aqueous extraction is conducted at a temperature of between 220°C and 240°C. In certain embodiments, the aqueous extraction is conducted at a temperature of above 221°C. The dwell times at such temperatures are typically from 1 minute to 15 minutes. Such high temperatures are associated with high yields and the production of undesirable off-flavours and acrylamide content.

For the avoidance of doubt, a primary coffee extract is obtained by aqueous extraction of roasted coffee beans that have not previously been extracted (or have only be subjected to an aroma recovery step). A secondary coffee extract is obtained by aqueous extraction of roasted coffee beans that have previously been extracted with hot water. A tertiary coffee extract is obtained by aqueous extraction of roasted coffee beans that have previously been extracted with hot water twice. The extract conditions (i.e. temperature) typically increase with each of the primary, secondary and tertiary extraction steps.

The low aromatic aqueous coffee is typically a secondary or tertiary extract or a combination of the two. In one embodiment the low aromatic aqueous coffee extract having a first acrylamide content is a mixture of secondary and tertiary coffee extracts.

Preferably, contacting the low aromatic aqueous coffee extract with a selectively-permeable membrane comprises filtering the low aromatic aqueous coffee extract through a selectively-permeable membrane by reverse osmosis or nanofiltration. This ensures a high surface area for treating the soluble coffee solids in the extract.

Preferably the selectively-permeable membrane is selective for acrylamide. Preferably the selectively-permeable membrane has a pore size of between 0.1 to 10 nm. Preferably the selectively-permeable membrane has a molecular weight cut-off of 200 Da, preferably 100 Da. Preferably, a pressure of up to 3000 kPa, or up to 4000 kPa, is applied to the membrane during filtration.

In certain embodiments, the second acrylamide content is at least 10%, at least 20%, at least 30%, at least 40%, at least 50%, at least 60%, at least 70%, at least 80%, at least 90%, at least 95%, at least 99% or 100% lower than the first acrylamide content.

In certain embodiments, both a low aromatic aqueous secondary coffee extract and a low aromatic aqueous tertiary coffee extract may be treated according to the first aspect of the invention, filtering the extracts through a selectively-permeable membrane by reverse osmosis or nanofiltration.

In certain embodiments, only a low aromatic aqueous secondary coffee extract or alternatively only a low aromatic aqueous tertiary coffee extract may be treated according to the first aspect of the invention, filtering the extract through a selectively-permeable membrane by reverse osmosis or nanofiltration.

There is described herein a liquid coffee concentrate or soluble coffee product obtainable according to the process described in the first aspect. This product is characterised by having the extraction profile of a more intensively processed coffee extract (i.e. a higher yield) coupled with low levels of acrylamide.

Preferably the process further comprises a step of concentrating the low aromatic aqueous coffee extract having a second acrylamide content. Low solids contents can be associated with higher extraction yields from the beans, but higher solids are required for a useful product to be obtained.

Alternatively, the process further comprises a step of drying, thereby producing a soluble coffee product.

Preferably the process further comprises regenerating the spent resin. This permits the process to be conducted on a continuous basis.

In certain embodiments, the liquid coffee concentrate or soluble coffee product obtainable by the method of the present invention has a reduced acrylamide level of 2%- 50%wt reduction. Acrylamide levels can be measured by Liquid Chromatography technique (LC) with Mass Spectrometry (MS) as detection method using Electrospray ionization (LC-ESI-MS/MS) and are measured on the basis of the dry weight of the relevant extract.

The coffee product is preferably made by combining untreated primary extract with a treated secondary and/or tertiary extract. The ratio of treated to untreated extracts in the product will have an effect on the level of acrylamide reduction observed. The higher the proportion treated, the lower the acrylamide content. However, the greater proportion treated the greater the divergence of the product from the original flavour.

In a third aspect, the present invention provides the use of a selectively-permeable membrane for reducing the acrylamide content of a low aromatic aqueous coffee extract, wherein the selectively-permeable membrane is selective for acrylamide.

### DETAILED DESCRIPTION

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

### A. Process for producing a liquid coffee concentrate

The present invention is based on the finding that it is particularly advantageous to conduct an acrylamide reduction step on a low aromatic aqueous coffee extract. This extract is typically obtained from roasted and ground coffee beans that have previously been subjected to at least an aroma recovery process and a primary extraction process. A low aromatic aqueous coffee extract can be obtained from this dearomatised roasted and ground coffee. The low aromatic aqueous coffee extract is subsequently filtered through a selectively-permeable membrane in order to remove acrylamide from the extract. Selectively-permeable membranes, as will be explained elsewhere herein, have a microporous physical structure that allows for the selective filtration of molecules and/or ions. A selectively-permeable membrane that is selective for acrylamide can be used to selectively extract acrylamide from an aqueous coffee extract.

According to a first aspect of the invention, there is provided a process for producing a liquid coffee concentrate. The process comprises the steps of:
a) providing a low aromatic aqueous coffee extract having a first acrylamide content;
b) providing a high aromatic aqueous coffee extract;
c) contacting the low aromatic aqueous coffee extract with a selectively-permeable membrane to provide a low aromatic aqueous coffee extract having a second acrylamide content; and
d) combining the low aromatic aqueous coffee extract having a second acrylamide
content and the high aromatic aqueous coffee extract to provide a liquid coffee concentrate,
wherein the second acrylamide content is lower than the first acrylamide content.

The process comprises a number of steps. It will be apparent that a number of these steps must be conducted sequentially, but it should also be appreciated that the steps can be conducted as part of a continuous process, batchwise or a combination of the two.

### i. Roasted and ground coffee

According to a step of the process (step a), a low aromatic aqueous coffee extract having a first acrylamide content is provided. According to a further step of the method (step b), a high aromatic aqueous coffee extract is also provided. The coffee extracts may be obtained from raw coffee beans which have been roasted and ground using well established techniques in the art. The raw coffee beans can be a mixture of different types of coffee beans. For example, the raw coffee beans can be a mixture of coffee Arabica and coffee Robusta. The process of grinding the roasted coffee beans requires that a compromise is sought between obtaining the largest possible surface area of ground coffee beans and obtaining the lowest possible pressure drop across the extraction cell. Typically, the ground coffee beans have an average size of at most 2.0 millimetres.

### ii. Aroma recovery process

In order to better preserve coffee aromas, the acrylamide reduction step (step c) of the present invention is conducted on a low aromatic aqueous coffee extract. This avoids the loss of desirable aromas during the filtration process and also reduces the volume of extract to be treated.

This low aromatic aqueous coffee extract having a first acrylamide content is obtained by subjecting roasted and ground coffee to an aroma recovery process and, optionally a primary extraction, and performing an extraction step on the remaining dearomatised roasted and ground coffee. The aroma recovery process provides both a high aromatic aqueous coffee extract, which can be stored for later use, and dearomatised roasted and ground coffee which can be used for extraction. Therefore, prior to commencement of the extraction process performed on the dearomatised and/or spent roasted and ground coffee, aroma recovery is performed on the roast and ground coffee to recover the most volatile and desirable aromas. The resulting aroma-rich steam is condensed and stored under chilled conditions to be later combined with the treated low aromatic aqueous extract. Accordingly, the process of producing a liquid coffee concentrate comprises subjecting roasted and ground coffee to an aroma recovery process to obtain: (i) a high aromatic aqueous coffee extract; and (ii) dearomatised roasted and ground coffee.

Examples of aroma recovery include steam stripping, or supercritical CO₂ extraction. Preferably, the aroma recovery process involves contacting the roasted and ground coffee with steam, to strip any aromas from the coffee, followed by subsequent recovery of the aromas from the steam as a high aromatic aqueous coffee extract. Preferably, the aroma recovery step is conducted under vacuum. In certain embodiments, the aroma recovery process involves contacting the roasted and ground coffee with steam and recovering the high aromatic aqueous coffee extract from the steam.

As known to a skilled person, a high aromatic coffee extract distinguishes itself from a low aromatic coffee extract by having a comparably high amount of volatile flavour compounds compared to semi-volatile flavour compounds. Such compounds are known for example from Clarke R.J. and Vitzthum O.G. (Coffee Recent Developments, 2001, ISBN 0-632-05553-7, p. 71, table 3.3). From this table it is clear that on the one hand propanal, methyl propanal, and 2,3 butanedione are measurable volatile flavour compounds. Pyrazine compounds and guaiacol compounds on the other hand are semi-volatile flavour compounds. Taking 2,3-butanedione as an example of a volatile coffee flavour compound and ethylguaiacol (4-ethyl 2-methoxyphenol) as an example of a semi-volatile coffee flavour compound, when these compounds are in a wt/wt ratio of 2,3-butanedione to ethylguaiacol of more than 30 in a particular coffee extract, that extract can be described as a high aromatic coffee extract. Consequently, a low aromatic coffee extract has a wt/wt ratio of 2,3-butanedione to ethylguaiacol of less than 30.

### iii. Extraction

The low aromatic aqueous coffee extract may be obtained by any known extraction technique. For example, the aqueous extract may be prepared by counter-current percolator extraction of coffee. The low aromatic aqueous coffee extract may be obtained by the aqueous extraction of dearomatised roasted and ground coffee.

For example, in certain embodiments, the dearomatised roasted and ground coffee is subjected to one or more aqueous extraction steps to produce one or more aqueous coffee extracts. The dearomatised roasted and ground coffee may be subjected to a plurality of extraction steps to produce a plurality of extracts. The dearomatised roasted and ground coffee may be subjected to an aqueous extraction at a temperature of above 100°C. Preferably, the dearomatised roasted and ground coffee is subjected to an aqueous extraction at a temperature of above 140°C. The dwell times at such temperatures are typically from 1 minute to 30 minutes. In more preferred embodiments, the aqueous extraction is conducted at a temperature of above 200°C, preferably from 200 to 260°C.In certain embodiments, the aqueous extraction is conducted at temperature of between 220°C and 240°C. In certain embodiments, the aqueous extraction is conducted at a temperature of above 221°C. The dwell times at such temperatures are typically from 1 minute to 15 minutes, preferably from 3 minutes to 13 minutes, more preferably from 3 minutes to 8 minutes. Preferably, extraction of dearomatised roasted and ground coffee provides at least a low aromatic aqueous coffee extract having a first acrylamide content. The low aromatic aqueous coffee extract is preferably a secondary and/or tertiary coffee extract as described herein. It is this low aromatic aqueous coffee extract having a first acrylamide content that is subjected to an acrylamide reduction step (step c).

Due to the high temperatures employed during the extraction process, especially by providing the tertiary extract above 200°C the pressure in the reactor may vary. Accordingly, in certain embodiments, the aqueous extraction is conducted at a pressure of about 5 to 20 atmospheres, preferably 17 to about 14 atmospheres. Since high temperatures can negatively impact on the overall flavour and aroma properties of the coffee, it is desirable to control the reaction time to within the prescribed period with great reliability.

The dearomatised roasted and ground coffee may be subjected to an initial aqueous extraction (a primary extraction) at a temperature of below 170°C to obtain a primary aroma-rich extract. Preferably, the initial aqueous extraction is conducted at a temperature of 100 to 170°C, more preferably 140°C to 170°C. This initial extraction step produces a further aqueous coffee extract which can be stored along with the recovered high aromatic aqueous coffee extract. The aroma-rich extracts can be stored whilst the acrylamide reduction step (step c) is performed on the low aromatic aqueous coffee extract, before the individual extracts are combined. In certain embodiments, the initial extraction step produces a further aqueous coffee extract which can be combined with the high aromatic aqueous coffee extract and the low aromatic aqueous coffee extract having a second acrylamide content.

In a preferred embodiment, the aqueous extraction is preferably done as a split extraction. Processes of split extraction are known. A reference in this respect is WO 2007/043873. In the split extraction method, roasted and ground coffee is subjected to a primary extraction with water whereby a primary aroma-rich extract is obtained with a draw-off factor of at most 2.5, preferably at most 2.0, more preferably at most 1.5 and most preferably at most 1.0. Thereafter, optionally, a second primary extract is obtained. Preferably, the water-coffee ratio is between 5.0 and 15. More preferably, the water-coffee ratio is lower than 10, and most preferably, the water-coffee ratio is between 6.5 and 8.5.

The term "draw-off factor" is understood to mean the ratio of the mass of the extract and the mass of the dry roasted and ground coffee in the primary extraction cell. In practice, this draw-off factor is determined by a compromise between, on the one side, a sufficient degree of coffee aroma recovery in the first primary extract, and, on the other side, a lowest possible volume of the first primary extract. The draw-off factor for that matter depends on the coarseness or degree of grinding of the roasted coffee, the extraction cell and, in particular, the number of percolators placed in series, the water-coffee ratio, the cycle time, the feed water temperature and the desired concentration of the end product and the like.

In embodiments of split extraction, where a second primary extract is recovered from the primary extraction cell, this further extraction also takes place in the primary extraction cell after draw-off and storage of the first primary extract.

The primarily extracted, roasted, ground coffee is then fed to a further extraction section in which a subsequent extract is obtained (a low aromatic aqueous coffee extract). Optionally, the second primary extract may be added to this subsequent extract. Optionally, the primarily extracted, roasted, ground coffee may be subjected to a plurality of extraction steps to produce a plurality of subsequent extracts.

The primary and subsequent extractions can be carried out in customary extraction cells. In a preferred embodiment, both the primary and the subsequent extraction(s) are carried out in a percolator or in percolators placed in series. In particular, the subsequent extraction(s) is advantageously carried out in at least 2, and preferably at least 4 series-connected percolators. As a rule, the number of percolators used in the primary extraction section is at least 0.5 which means that during 50% of the cycle time a percolator is connected in the primary extraction section. Preferably, at least 1 or 2 percolators are connected in the primary extraction section.

In embodiments where the dearomatised roasted and ground coffee has been subjected to a plurality of extraction steps, the coffee extracts provided in steps a) and b) may be obtained by separating the plurality of extracts into a low aromatic aqueous coffee extract and a further high aromatic aqueous coffee extract, respectively.

### iv. The low aromatic aqueous coffee extract

The low aromatic aqueous coffee extract having a first acrylamide content is an undiluted or unconcentrated extract. An extract will generally have a dry matter solids content of 15% by weight or less, preferably of from 2 to 10% by weight. Preferably, the acrylamide reduction step (step c) is conducted on an extract, it will be understood that a small change of the extract, by insubstantial dilution or insubstantial concentration, will not deviate from the working of the invention.

Most preferably, the low aromatic aqueous coffee extract that is subjected to an acrylamide reduction step (step c) is an extract that is low in aroma components and shows a considerable acrylamide content. Preferably, the low aromatic aqueous coffee extract has a high acrylamide content compared to the acrylamide content of other extract obtained in the extraction process. Preferably, the low aromatic aqueous coffee extract having a first acrylamide content contains greater than 10% of the total amount of acrylamide present in all the extracts obtained in the extraction process. Preferably, the low aromatic aqueous coffee extract having a first acrylamide content contains greater than 20% of the total amount of acrylamide present in all the extracts obtained in the extraction process.

### v. Acrylamide reduction

In accordance with the invention, the low aromatic aqueous coffee extract is contacted with a selectively-permeable membrane. The low aromatic aqueous coffee extract is contacted with a selectively-permeable membrane to provide a low aromatic aqueous coffee extract having a second acrylamide content. Contacting the low aromatic aqueous coffee extract with a selectively-permeable membrane comprises filtering the low aromatic aqueous coffee extract through a selectively-permeable membrane by reverse osmosis or nanofiltration.

Selectively-permeable membranes that may be used in the present invention operate under the principle of size-exclusion wherein a mixture of compounds may be separated by molecular size. There are different kinds of selectively-permeable membranes distinguished by a particular pore size and molecular weight cut-off (MWCO). Molecular weight cut-off is used in filtration to describe pore size distribution and retention capabilities of membranes. It is defined as the lowest molecular weight (in Daltons) at which greater than 90% of a solute with a known molecular weight is retained by the membrane. A suitable membrane is selected according to the molecule to be removed. Depending on the molecular weight-cut off of the membrane, molecules of a lower molecular weight than the cut off value will pass through the membrane to form the permeate. Molecules of a higher molecular weight that the molecular weight cut off value will be retained by the membrane to form the retentate.

Reverse osmosis and nanofiltration are membrane filtration technologies in which pressure is applied to a liquid stream, driving it though a selectively-membrane in order to remove dissolved solids. Reverse osmosis is the finest of all membrane filtration systems, with extremely small pores capable of removing particles as small as 0.1 nm. A reverse osmosis membrane may have a molecular weight cut-off of 100 Daltons. Nanofiltration delivers slightly coarser filtration than reverse osmosis, with the ability to remove particles as small as 1 nm. A nanofiltration membrane may have a molecular weight cut-off of 200 Daltons. In certain embodiments, the selectively-permeable membrane has a pore size of between 0.1 to 10 nm. In certain embodiments, the selectively-permeable membrane has a molecular weight cut-off of 200 Da. In certain embodiments, the selectively-permeable membrane has a molecular weight cut-off of 100 Da.

The selectively-permeable membrane for use in the present invention is selective for acrylamide. Acrylamide can be separated by filtering a low aromatic aqueous coffee extract through a selectively-permeable membrane. Due to its small size and high solubility, acrylamide is able to permeate through the membrane. It is understood that any selectively-permeable membrane may be used in the present invention provided that it is suitable for separation of acrylamide from the aqueous coffee extract. The acrylamide molecule has a molecular weight of 71.08 g/mol. This molecular weight value is much less than the value of the soluble solids in the low aromatic aqueous coffee extract, and therefore the acrylamide molecules will pass through the selectively-permeable membrane with the separated water, while the remaining extract comprising the soluble coffee solids will be retained by the membrane and can be collected.

Membranes suitable for use in the present invention may be fabricated with ceramic or polymeric materials and have different configurations including spiral wound, hollow fiber or tubular. In certain embodiments, the selectively-permeable membrane is an organic or inorganic material. Suitable membrane sizes will vary depending on the scale of the production process. Examples include the SR3D^{™} Membrane (Koch Membrane Systems). The membrane material may be TFC^{©} polyamide.

The process of the present invention has as additional advantage that it may also be suitable for the separation of other undesired components. For example, in certain embodiments, the selectively-permeable membrane is selective for organic acids. Organic acids are formed as a result of upstream processes such as roasting and extraction. Some of these organic acids are further synthesised causing chemical acidification of the liquid coffee concentrate and thus decreasing shelf life. Examples of organic acids present in low aromatic coffee extract and can be separated with this method include acetic acid, formic acid, lactic acid and glycolic acid. It may therefore be desirable to remove organic acids via filtration through the selectively-permeable membrane. However, any significant removal of these species would be expected to have a significant impact on the coffee taste profile. Accordingly, in certain embodiments the low aromatic aqueous coffee extract is contacted with a selectively-permeable membrane to reduce or remove organic acids from the low aromatic aqueous coffee extract

While reverse osmosis and nanofiltration are fairly efficient purification technologies, both demand energy to move water across their membranes. This is because their fine pores result in a high concentration of salts and other compounds on the retentate side of the membrane, and as a result, enough pressure must be applied that the water is able to overcome the osmotic pressure that causes water to resist flowing through the membrane. In certain embodiments, a pressure of up to 3000 kPa, or up to 4000 kPa, is applied to the membrane during filtration.

In certain embodiments, the filtration step is carried out using cross-flow filtration, in which the fluid flow is tangential to the surface of the membrane. In other embodiments, the filtration step is carried out using dead end filtration, in which the fluid flow is perpendicular to the surface of the membrane. The filtration step may be carried out using any other membrane fractionation technique known to the skilled person.

It is understood that the step of filtering a low aromatic aqueous coffee extract through a selectively-permeable membrane provides a dual purpose. The filtration step can be used to separate key components, such as acrylamide and/or organic acids, as explained elsewhere herein. Additionally, the filtration step can be used to concentrate the low aromatic aqueous extract. Accordingly, in certain embodiments, contacting the low aromatic aqueous coffee extract with a selectively-permeable membrane simultaneously concentrates the coffee extract. Alternatively, it may be necessary to perform an additional concentration step after the filtration step. In other embodiments, the process further comprises a step of concentrating the low aromatic aqueous coffee extract having a second acrylamide content. The low aromatic aqueous coffee extract having a second acrylamide content may be further concentrated by any concentration process known in the art. For example, the extract may be further concentrated by evaporation, by freezing concentration, or by further filtration technologies, such as reverse osmosis.

In accordance with the invention, the step (step c) of contacting a low aromatic aqueous coffee extract having a first acrylamide content with a selectively permeable membrane produces a low aromatic aqueous coffee extract having a second acrylamide content. This low aromatic aqueous extract having a second acrylamide content is formed on the retentate side of the membrane. Importantly, in accordance with the invention, the second acrylamide content is lower than the first acrylamide content. In other words, the amount of acrylamide in the low aromatic aqueous extract is reduced after contact with the selectively-permeable membrane. In certain embodiments, the second acrylamide content is at least 10%, at least 20%, at least 30%, at least 40%, at least 50%, at least 60%, at least 70%, at least 80%, at least 90%, at least 95%, at least 99% or 100% lower than the first acrylamide content. The acrylamide content of the low aromatic aqueous coffee extract after contact with the membrane (i.e. the low aromatic aqueous coffee extract formed on the retentate side of the membrane) is lower than the acrylamide content of the low aromatic aqueous coffee extract prior to contact with the membrane. In particularly preferred embodiments, there is no acrylamide present in the low aromatic aqueous coffee extract after contact with the selectively-permeable membrane. Therefore, in certain embodiments, the low aromatic aqueous coffee extract having a second acrylamide content does not comprise any acrylamide.

In certain embodiments, the low aromatic aqueous coffee extract having a first acrylamide content is contacted with the selectively-permeable membrane to provide a low aromatic aqueous coffee extract having a second acrylamide content wherein the second acrylamide content is at least 10%, at least 20%, at least 30%, at least 40%, at least 50%, at least 60%, at least 70%, at least 80%, at least 90%, at least 95%, at least 99% or 100% lower than the first acrylamide content. In certain embodiments, the low aromatic aqueous coffee extract having a first acrylamide content is contacted with the selectively-permeable membrane for a time sufficient to produce a low aromatic aqueous coffee extract having a second acrylamide content that is a at least 10%, at least 20%, at least 30%, at least 40%, at least 50%, at least 60%, at least 70%, at least 80%, at least 90%, at least 95%, at least 99% or 100% lower than the low aromatic aqueous coffee extract having a first acrylamide content.

The process comprises filtering the low aromatic aqueous coffee extract through a selectively-permeable membrane. To improve efficiency of the filtration process, the retentate may be recycled and subjected to the filtration process multiple times. In certain embodiments, the step of filtering the low aromatic aqueous coffee extract through a selectively-permeable membrane is repeated at least one additional time. In certain embodiments, the step of filtering the low aromatic aqueous coffee extract through a selectively-permeable membrane is repeated multiple times. In other embodiments, the process requires filtering the low aromatic aqueous coffee extract through a selectively-permeable membrane a number of times sufficient to produce a low aromatic aqueous coffee extract having a second acrylamide content of at least 10%, at least 20%, at least 30%, at least 40%, at least 50%, at least 60%, at least 70%, at least 80%, at least 90%, at least 95%, at least 99% or 100% lower than the low aromatic aqueous coffee extract having a first acrylamide content.

At least 50 v/v%, more preferably 75 v/v%, most preferably 100% of the low aromatic aqueous coffee extract is contacted with the selectively-permeable membrane.

### vi. Concentrating and combining

According to a further step of the process (step d), the low aromatic aqueous coffee extract having a second acrylamide content and the high aromatic aqueous coffee extract are combined to provide a liquid coffee concentrate. The two coffee extracts are generally combined by simple mixing.

As mentioned elsewhere herein, in embodiments where an initial aqueous extraction step is performed at a temperature of below 170°C to obtain a further aromatic aqueous coffee extract, the further aqueous coffee extract may be combined with the high aromatic aqueous coffee extract and the low aromatic aqueous coffee extract having a second acrylamide content.

As mentioned elsewhere herein, in embodiments where the dearomatised roasted and ground coffee has been subjected to a plurality of extraction steps, and the plurality of extracts are separated into a low aromatic aqueous coffee extract and a further high aromatic aqueous coffee extract, the further high aromatic aqueous coffee extract(s) may be combined with the high aromatic aqueous coffee extract of step (b) and the low aromatic aqueous coffee extract having a second acrylamide content.

In certain embodiments, the process further comprises a step of concentrating the low aromatic aqueous coffee extract having a second acrylamide content prior to the step of combining. In other words, the process may comprise an additional step between step c) and step d) of concentrating the low aromatic aqueous coffee extract having a second acrylamide content. Such extracts may need to be concentrated in order to achieve the desired level of soluble coffee solids. For example, an extract containing 2 to 20% by weight of soluble coffee solids, is then concentrated, for example by evaporation, by freezing concentration, or by filtration, until a concentration of 30 to 55% solid matter is reached. Preferred concentrates comprise 6 to 80 wt.% coffee solids, preferably 10 to 65 wt.%, more preferably 15 to 50 wt.%.

A concentrate is distinguished from an extract by having undergone a substantial water removing step such as water evaporation. Methods of concentration such as evaporation, freezing concentration, and filtration are well-known to the skilled person. Preferably the step of concentrating the low aromatic aqueous coffee extract having a second acrylamide content is conducted in an evaporator unit.

The recovered high aromatic aqueous coffee extract can then be combined with the concentrated low aromatic aqueous coffee extract having a second acrylamide content to form a liquid coffee concentrate. This improves the flavour of the extract without compromising the solids level. Furthermore, it is advantageous to concentrate the low aromatic extract prior to combining the concentrated extract with the high aromatic extract so as to preserve the aromas in the high aromatic extract which may otherwise have been lost during the concentration step.

Accordingly, in one embodiment there is provided a process for producing a liquid coffee concentrate, the process comprising the steps of:
a) providing a low aromatic aqueous coffee extract having a first acrylamide content;
b) providing a high aromatic aqueous coffee extract;
c) contacting the low aromatic aqueous coffee extract with a selectively-permeable membrane to provide a low aromatic aqueous coffee extract having a second acrylamide content;
d) concentrating the low aromatic aqueous coffee extract having a second acrylamide content; and
e) combining the concentrated low aromatic aqueous coffee extract having a second acrylamide content and the high aromatic aqueous coffee extract to provide a liquid coffee concentrate,
wherein the second acrylamide content is lower than the first acrylamide content.

In the event that part (e.g. at least 50%) of the low aromatic aqueous coffee extract has been subjected to the acrylamide reduction step (step c), the untreated low aromatic aqueous coffee extract may be combined with the treated low aromatic aqueous coffee extract, i.e. before concentration, or with the treated and concentrated low aromatic aqueous coffee extract, i.e. after concentration.

As mentioned elsewhere herein, the high aromatic aqueous coffee extract obtained from the aroma recovery process may be stored for later use. Preferably the high aromatic aqueous coffee extract is cooled and stored at a temperature below 25°C, more preferably below 10°C, most preferably below 0°C. After storage, the high aromatic aqueous coffee extract may be directly, without further processing, added to the concentrated low aromatic aqueous coffee extract having a second acrylamide content. It is preferred that the high aromatic aqueous coffee extract is stored as briefly as possible and cooled, preferably at an atmosphere of an inert gas such as nitrogen before combining with the concentrated low aromatic aqueous coffee extract having a second acrylamide content. Owing to these steps, loss of aroma and aroma degradation is limited as much as possible.

### vii. Drying

In accordance with a further embodiment of the invention, the process may further comprise a step of drying, thereby producing a soluble coffee product. In certain embodiments, the soluble coffee product is a soluble powder. Preferably the drying step is freeze-drying since this helps to retain the preserved aroma profile of the product. Preferably the powder product has a particle size of from 200 to 3000 microns. Spray drying can also be used as a drying method.

### i. Liquid coffee concentrate/soluble coffee product

There is described herein a liquid coffee concentrate or a soluble coffee product obtainable according to the processes described herein. The liquid coffee concentrate and/or the soluble coffee product are distinguished from other coffee concentrates and soluble coffee products on account of their reduced acrylamide content. For instance, the liquid coffee concentrate obtainable according to the processes described herein has a reduced acrylamide level of 2-50% compared to a untreated product. In another instance, the soluble coffee product obtainable according to the processes described herein has less than 2-50% acrylamide compared to a untreated product.

### C: Use of a selectively-permeable membrane for reducing the acrylamide content of a low aromatic aqueous coffee extract

In another aspect of the present invention, there is provided a use of a selectively-permeable membrane for reducing the acrylamide content of a low aromatic aqueous coffee extract. In certain embodiments, there is provided a use of a selectively-permeable membrane for reducing the acrylamide content of a low aromatic aqueous coffee extract, wherein the selectively-permeable membrane is selective for acrylamide. In other words, the selectively-permeable membrane is provided for separation and/or extraction of acrylamide from an aqueous coffee extract.

In accordance with the invention, the selectively-permeable membrane is used to reduce the acrylamide content of a low aromatic aqueous coffee extract. As explained elsewhere herein, it is advantageous to subject roasted and ground coffee beans to an aroma recovery process to preserve the aroma components. A low aromatic aqueous coffee extract can then be obtained, and acrylamide reduction can be performed on this low aromatic extract. This ensures that the acrylamide reduction process has a lower impact on the overall aroma and flavour profile of the coffee product compared to the prior art.

A further advantage associated with the use of a selectively-permeable membrane as provided herein is that only the low aromatic aqueous coffee extract is contacted with the selectively-permeable membrane. This is in contrast to previous methods which perform acrylamide reduction on the total aqueous coffee extract obtained from the extraction process. By contacting the selectively-permeable membrane with a part of the volume of extract, only a percentage of the total extract is treated and therefore there is less interference with the properties of the final product.

All embodiments described in respect of the first aspect of the invention apply equally to this further aspect of the invention.

Preferably the selectively-permeable membrane is selective for acrylamide. Preferably the selectively-permeable membrane has a pore size of between 0.1 to 10 nm. Preferably the selectively-permeable membrane has a molecular weight cut-off of 200 Da, preferably 100 Da. Preferably, a pressure of up to 3000 kPa, or up to 4000 kPa, is applied to the membrane during filtration.

In preferred embodiments, the use comprises contacting a low aromatic aqueous coffee extract with a selectively-permeable membrane. In specific embodiments, the use comprises filtering a low aromatic aqueous coffee extract through a selectively-permeable membrane by reverse osmosis or nanofiltration. In other embodiments, the use comprises filtering the low aromatic aqueous coffee extract through a selectively-permeable membrane by reverse osmosis or nanofiltration a number of times sufficient to reduce the acrylamide content of the low aromatic aqueous coffee extract. In certain embodiments, the acrylamide content is reduced by at least 10%, at least 20%, at least 30%, at least 40%, at least 50%, at least 60%, at least 70%, at least 80%, at least 90%, at least 95%, at least 99% or 100% compared to the acrylamide content of the low aromatic aqueous coffee extract prior to contact with the selectively-permeable membrane.

The selectively-permeable membrane may also be suitable for adsorption and/or separation of other undesired components. For example, in certain embodiments, the selectively-permeable membrane is selective for organic acids. In certain embodiments, the low aromatic aqueous coffee extract may be contacted with a selectively-permeable membrane to reduce or remove organic acids from the low aromatic aqueous coffee extract. In preferred embodiments, the use comprises filtering a low aromatic aqueous coffee extract through a selectively-permeable membrane by nanofiltration to reduce or remove organic acids from the low aromatic aqueous coffee extract. In preferred embodiments, there is provided a use of a selectively-permeable membrane for reducing the organic acid content of an aqueous coffee concentrate,

In other embodiments, there is provided a use of a selectively-permeable membrane for reducing the acrylamide content and/or organic acid content of low aromatic aqueous coffee extract and simultaneously concentrating the low aromatic aqueous coffee extract.

### BRIEF DESCRIPTION OF THE DRAWING

The invention will now be described further with reference to the following non-limiting figure.

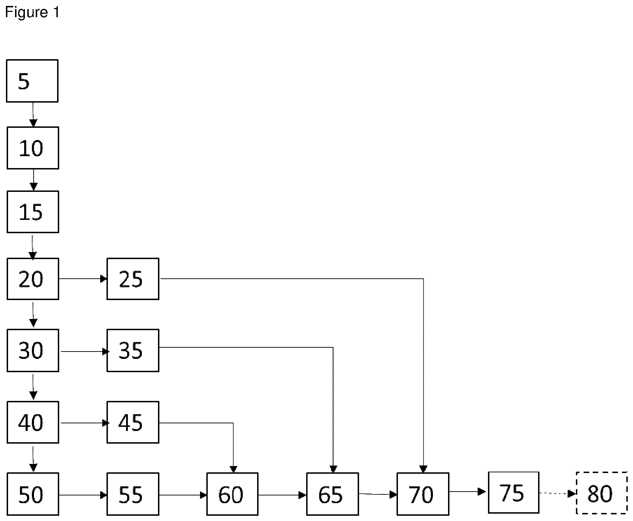

**Figure 1** shows an exemplary flow-chart of the method steps described herein.
**Figure 2** shows Acrylamide content before and after treatment in tertiary extract.
**Figure 3** shows Acrylamide content before and after treatment in combined secondary and tertiary extract.
**Figure 4** shows the reduction in the content in key organic acids when secondary and tertiary extract was filtered using a nanofiltration membrane.

A first step involves the provision of raw green coffee beans 5. These may be any suitable coffee beans 5, such as Arabica or Robusta beans, or a mixture thereof. The coffee beans are subjected to a roasting step 10 using conventional roasting processes to achieve desirably roasted beans.

The roasted beans are subjected to a grinding step 15. Grinding is typically effected using a roller or burr-type grinder, with the end particle size and distribution being selected depending on the subsequent extractions steps. For example, percolation extraction systems tend to rely on an average particle size of about 2 microns, whereas slurry-based processing systems may favour a finer particle size, such as down to about 300 microns.

The roasted and ground coffee is then subjected to an aroma recovery step 20, such as for example involving passing steam through the roasted and ground coffee. The steam is recovered and condensed to provide a high aromatic extract 25. The high aromatic extract 25 is set aside for subsequent use, as described below, or may be used directly in a continuous process where all of the steps are being conducted in parallel. The roasted and ground coffee which has been subjected to the aroma recover step are dearomatised by the process.

The dearomatised roasted and ground coffee is then passed to a primary extraction step 30 wherein hot water is passed through the roasted and ground coffee under pressure, such that the water is at a temperature of from 100 to 170°C. This produces a primary extract 35 which has a good flavour profile (albeit a low yield) and low thermal production markers.

The roasted and ground coffee is then passed to a secondary extraction step 40 wherein hot water is passed through the roasted and ground coffee under pressure, such that the water is at a temperature of from 140 to 230°C. This produces a secondary extract 45 which has a reasonable flavour profile and a good yield, albeit with moderate levels of thermal production markers, including acrylamide.

The roasted and ground coffee following the secondary extraction step 40, so-called spent coffee, can be passed to a tertiary extraction step 50. This would typically be hotter and for longer than the secondary extraction step 40, in a temperature range of 200 to 260°C. The roasted and ground coffee following this step would be a waste product, optionally combusted for thermal energy. The tertiary extract 55 from this tertiary extraction step 50 shows an amount of acrylamide.

The process as described so far has provided four extracts (25, 35, 45, 55). The tertiary extract 55 which is a low aromatic extract and, if desired the secondary extract 45, are then treated with a selectively-permeable membrane in an acrylamide reduction step 60 to reduce the levels of acrylamide in the product. The high aromatic extract 25 and the primary extract 35 are not subjected to the acrylamide reduction step 60 in order to avoid a loss of volatile flavour components.

The process optionally involves a concentration step 65. This can be performed on any of the extracts (35, 45, 55) to increase the solids of the extract. The secondary and tertiary extracts can be concentrated before the acrylamide reduction step 60, if desired, to decrease the volume of extract to be treated.

The process involves a mixing step 70. This involves blending the high aromatic extract 25 with the other extracts (35, 45, 55). The extracts can be blended simultaneously or in turn. The mixing step 70 can be conducted before or after any optional concentration step 65.

The product of the mixing step 70 is a concentrated liquid coffee extract 75 suitable for reconstitution with hot water to form a coffee beverage. Alternatively, the concentrated liquid coffee extract 75 can be dried, such as by spray-drying or freeze-drying to produce an instant soluble coffee powder 80.

The invention will now be further understood with reference to the following non-limiting examples.

### EXAMPLES

### Example 1

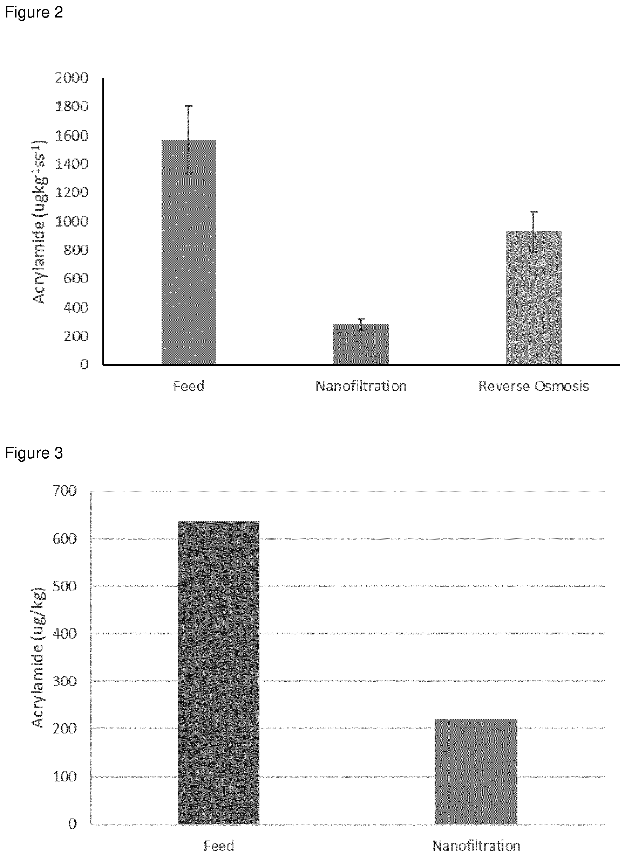

Figure 2 shows the reduction in acrylamide content when tertiary extract was filtered using two types of selective membranes. Both types of selective membranes achieve a reduction of at least 30% in acrylamide in tertiary coffee extract.

### Example 2

Figure 3 shows the reduction in acrylamide content when secondary and tertiary extract was filtered using a nanofiltration membrane. A reduction of at least 50% was achieved.

### Example 3

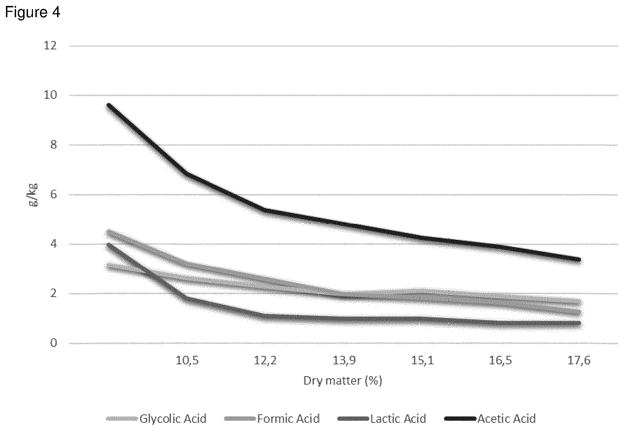

Figure 4 shows the reduction in the content in key organic acids when secondary and tertiary extract was filtered using a nanofiltration membrane. A reduction of 46% was achieved for Glycolic acid, 65% for acetic acid 72% for formic acid and 80% in the case of lactic acid. All these organic acids are considered relevant in the flavour perception of coffee.

It is noted that, from top to bottom with respect to the start of the lines, the first (highest) is acetic acid, the second is formic acid, the third is lactic acid and the fourth (lowest) is glycolic acid.

The present invention is not to be limited in scope by the specific embodiments described herein. Indeed, various modifications of the invention in addition to those described herein will become apparent to those skilled in the art from the foregoing description and accompanying figures. Such modifications are intended to fall within the scope of the appended claims.

Unless defined otherwise, all technical and scientific terms used herein have the same meaning as commonly understood by the ordinary person skilled in the art to which the invention pertains.

## Claims

1. A process for producing a liquid coffee concentrate, the process comprising the steps of:
a) providing a low aromatic aqueous coffee extract having a first acrylamide content;
b) providing a high aromatic aqueous coffee extract;
c) contacting the low aromatic aqueous coffee extract with a selectively-permeable membrane to provide a low aromatic aqueous coffee extract having a second acrylamide content; and
d) combining the low aromatic aqueous coffee extract having a second acrylamide content and the high aromatic aqueous coffee extract to provide a liquid coffee concentrate,
wherein the second acrylamide content is lower than the first acrylamide content.

2. The process of claim 1, wherein the process comprises subjecting roasted and ground coffee to an aroma recovery process to obtain:
(i) the high aromatic aqueous coffee extract; and
(ii) dearomatised roasted and ground coffee;
preferably wherein the aroma recovery process involves contacting the roasted and ground coffee with steam and obtaining the high aromatic aqueous coffee extract from the steam.

3. The process of claim 2, wherein the low aromatic aqueous coffee extract having a first acrylamide content is obtained by aqueous extraction of the dearomatised roasted and ground coffee, wherein the aqueous extraction is conducted at a temperature of above 140°C, preferably 140 to 230 °C.

4. The process of claim 2 or claim 3, wherein the low aromatic aqueous coffee extract having a first acrylamide content is obtained by the aqueous extraction of dearomatised roasted and ground coffee, preferably wherein the aqueous extraction is conducted at a temperature of from 200 to 260 °C.

5. The process of claim 2, 3 or 4, wherein prior to obtaining the low aromatic aqueous coffee extract having a first acrylamide content by aqueous extraction of the dearomatised roasted and ground coffee, the dearomatised roasted and ground coffee is subjected to an initial aqueous extraction at a temperature of below 170°C, preferably between 100 and 170 °C to obtain a further aromatic aqueous coffee extract which is combined in step d) with the low aromatic aqueous coffee extract having a second acrylamide content and the high aromatic aqueous coffee extract to provide the liquid coffee concentrate.

6. The process according to any preceding claim, wherein contacting the low aromatic aqueous coffee extract with a selectively-permeable membrane simultaneously concentrates the coffee extract.

7. The process according to any preceding claim, wherein the process further comprises a step of concentrating the low aromatic aqueous coffee extract having a second acrylamide content.

8. The process according to any preceding claim, wherein contacting the low aromatic aqueous coffee extract with selectively-permeable membrane comprises filtering the low aromatic aqueous coffee extract through a selectively-permeable membrane by reverse osmosis or nanofiltration, preferably wherein a pressure of up to 3000 kPa, or up to 4000 kPa, is applied to the membrane during filtration.

9. The process according to any preceding claim, wherein the selectively-permeable membrane is selective for acrylamide and organic acids.

10. The process according to any preceding claim, wherein the selectively-permeable membrane has a pore size of between 0.1 to 10 nm.

11. The process according to any preceding claim, wherein the selectively-permeable membrane has a molecular weight cut-off of 200 Da, preferably 100 Da.

12. The process according to any preceding claim, wherein the second acrylamide content is at least 10%, at least 20%, at least 30%, at least 40%, at least 50%, at least 60%, at least 70%, at least 80%, at least 90%, at least 95%, at least 99% or 100% lower than the first acrylamide content.

13. The process according to any preceding claim, further comprising a step of drying the liquid coffee concentrate, thereby producing a soluble coffee product.

14. Use of a selectively-permeable membrane for reducing the acrylamide content of an aqueous coffee concentrate, wherein the selectively-permeable membrane is selective for acrylamide.

15. Use of a selectively-permeable membrane for reducing the organic acid content of an aqueous coffee concentrate, wherein the selectively-permeable membrane is selective for organic acid.

## Patentansprüche

1. Verfahren zum Herstellen eines flüssigen Kaffeekonzentrats, das Verfahren umfassend die Schritte:
a) Bereitstellen eines niedrig aromatischen wässrigen Kaffeeextrakts, der einen ersten Acrylamidgehalt aufweist;
b) Bereitstellen eines hocharomatischen wässrigen Kaffeeextrakts;
c) Inberührungbringen des niedrig aromatischen wässrigen Kaffeeextrakts mit einer selektiv permeablen Membran, um einen niedrig aromatischen wässrigen Kaffeeextrakt bereitzustellen, der einen zweiten Acrylamidgehalt aufweist; und
d) Kombinieren des niedrig aromatischen wässrigen Kaffeeextrakts, der einen zweiten Acrylamidgehalt aufweist, und des hocharomatischen wässrigen Kaffeeextrakts, um ein flüssiges Kaffeekonzentrat bereitzustellen,
wobei der zweite Acrylamidgehalt niedriger als der erste Acrylamidgehalt ist.

2. Verfahren nach Anspruch 1, wobei das Verfahren ein Unterziehen von geröstetem und gemahlenem Kaffee einem Aromarückgewinnungsverfahren umfasst, um zu erhalten:
(i) den hocharomatischen wässrigen Kaffeeextrakt; und
(ii) entaromatisierten gerösteten und gemahlenen Kaffee;
vorzugsweise wobei das Aromarückgewinnungsverfahren das Inberührungbringen des gerösteten und gemahlenen Kaffees mit Dampf und das Erhalten des hocharomatischen wässrigen Kaffeeextrakts aus dem Dampf einschließt.

3. Verfahren nach Anspruch 2, wobei der niedrig aromatische wässrige Kaffeeextrakt, der einen ersten Acrylamidgehalt aufweist, durch wässrige Extraktion des entaromatisierten gerösteten und gemahlenen Kaffees erhalten wird, wobei die wässrige Extraktion bei einer Temperatur von über 140 °C, vorzugsweise 140 bis 230 °C, durchgeführt wird.

4. Verfahren nach Anspruch 2 oder 3, wobei der niedrig aromatische wässrige Kaffeeextrakt, der einen ersten Acrylamidgehalt aufweist, durch wässrige Extraktion von entaromatisiertem geröstetem und gemahlenem Kaffee erhalten wird, vorzugsweise wobei die wässrige Extraktion bei einer Temperatur von 200 bis 260 °C durchgeführt wird.

5. Verfahren nach Anspruch 2, 3 oder 4, wobei vor dem Erhalten des niedrig aromatischen wässrigen Kaffeeextrakts, der einen ersten Acrylamidgehalt aufweist, durch wässrige Extraktion des entaromatisierten gerösteten und gemahlenen Kaffees, der entaromatisierte geröstete und gemahlene Kaffee einer anfänglichen wässrigen Extraktion bei einer Temperatur von unter 170 °C, vorzugsweise zwischen 100 und 170 °C, unterzogen wird, um einen weiteren aromatischen wässrigen Kaffeeextrakt zu erhalten, der in Schritt d) mit dem niedrig aromatischen wässrigen Kaffeeextrakt, der einen zweiten Acrylamidgehalt aufweist, und dem hocharomatischen wässrigen Kaffeeextrakt kombiniert wird, um das flüssige Kaffeekonzentrat bereitzustellen.

6. Verfahren nach einem der vorstehenden Ansprüche, wobei das Inberührungbringen des niedrig aromatischen wässrigen Kaffeeextrakts mit einer selektiv permeablen Membran gleichzeitig den Kaffeeextrakt konzentriert.

7. Verfahren nach einem der vorstehenden Ansprüche, wobei das Verfahren ferner einen Schritt des Konzentrierens des niedrig aromatischen wässrigen Kaffeeextrakts, der einen zweiten Acrylamidgehalt aufweist, umfasst.

8. Verfahren nach einem der vorstehenden Ansprüche, wobei das Inberührungbringen des niedrig aromatischen wässrigen Kaffeeextrakts mit der selektiv permeablen Membran ein Filtern des niedrig aromatischen wässrigen Kaffeeextrakts durch eine selektiv permeable Membran durch Umkehrosmose oder Nanofiltration umfasst, vorzugsweise wobei während einer Filtration ein Druck von bis zu 3000 kPa oder bis zu 4000 kPa auf die Membran ausgeübt wird.

9. Verfahren nach einem der vorstehenden Ansprüche, wobei die selektiv permeable Membran für Acrylamid und organische Säuren selektiv ist.

10. Verfahren nach einem der vorstehenden Ansprüche, wobei die selektiv permeable Membran eine Porengröße zwischen 0,1 bis 10 nm aufweist.

11. Verfahren nach einem der vorstehenden Ansprüche, wobei die selektiv permeable Membran eine Molekulargewichtsgrenze von 200 Da, vorzugsweise 100 Da, aufweist.

12. Verfahren nach einem der vorstehenden Ansprüche, wobei der zweite Acrylamidgehalt mindestens 10 %, mindestens 20 %, mindestens 30 %, mindestens 40 %, mindestens 50 %, mindestens 60 %, mindestens 70 %, mindestens 80 %, mindestens 90 %, mindestens 95 %, mindestens 99 % oder 100 % niedriger als der erste Acrylamidgehalt ist.

13. Verfahren nach einem der vorstehenden Ansprüche, ferner umfassend einen Schritt eines Trocknens des flüssigen Kaffeekonzentrats, wobei dadurch ein lösliches Kaffeeprodukt hergestellt wird.

14. Verwendung einer selektiv permeablen Membran zum Verringern des Acrylamidgehalts eines wässrigen Kaffeekonzentrats, wobei die selektiv permeable Membran für Acrylamid selektiv ist.

15. Verwendung einer selektiv permeablen Membran zum Verringern des Gehalts an organischer Säure eines wässrigen Kaffeekonzentrats, wobei die selektiv permeable Membran für organische Säure selektiv ist.

## Revendications

1. Procédé pour la production d'un concentré de café liquide, le procédé comprenant les étapes consistant à :
a) fournir un extrait de café aqueux peu aromatique ayant une première teneur en acrylamide ;
b) fournir un extrait de café aqueux hautement aromatique ;
c) mettre en contact l'extrait de café aqueux peu aromatique avec une membrane sélectivement perméable pour fournir un extrait de café aqueux peu aromatique ayant une seconde teneur en acrylamide ; et
d) combiner l'extrait de café aqueux peu aromatique ayant une seconde teneur en acrylamide et l'extrait de café aqueux hautement aromatique pour fournir un concentré de café liquide,
dans lequel la seconde teneur en acrylamide est inférieure à la première teneur en acrylamide.

2. Procédé selon la revendication 1, dans lequel le procédé comprend la soumission de café torréfié et moulu à un procédé de récupération d'arômes pour obtenir :
(i) l'extrait de café aqueux hautement aromatique ; et
(ii) du café torréfié et moulu désaromatisé ;
de préférence dans lequel le processus de récupération d'arôme implique la mise en contact du café torréfié et moulu avec de la vapeur et l'obtention de l'extrait de café aqueux hautement aromatique à partir de la vapeur.

3. Procédé selon la revendication 2, dans lequel l'extrait de café aqueux peu aromatique ayant une première teneur en acrylamide est obtenu par extraction aqueuse du café torréfié et moulu désaromatisé, dans lequel l'extraction aqueuse est effectuée à une température supérieure à 140 °C, de préférence allant de 140 à 230 °C.

4. Procédé selon la revendication 2 ou la revendication 3, dans lequel l'extrait de café aqueux peu aromatique ayant une première teneur en acrylamide est obtenu par l'extraction aqueuse de café torréfié et moulu désaromatisé, de préférence dans lequel l'extraction aqueuse est effectuée à une température allant de 200 à 260 °C.

5. Procédé selon la revendication 2, 3 ou 4, dans lequel, avant l'obtention de l'extrait de café aqueux peu aromatique ayant une première teneur en acrylamide par extraction aqueuse du café torréfié et moulu désaromatisé, le café torréfié et moulu désaromatisé est soumis à une extraction aqueuse initiale à une température inférieure à 170 °C, de préférence comprise entre 100 et 170 °C, afin d'obtenir un extrait de café aqueux aromatique supplémentaire qui est combiné à l'étape d) avec l'extrait de café aqueux peu aromatique ayant une seconde teneur en acrylamide et l'extrait de café aqueux hautement aromatique pour fournir le concentré de café liquide.

6. Procédé selon l'une quelconque revendication précédente, dans lequel la mise en contact de l'extrait de café aqueux peu aromatique avec une membrane sélectivement perméable concentre simultanément l'extrait de café.

7. Procédé selon l'une quelconque revendication précédente, dans lequel le procédé comprend en outre une étape de concentration de l'extrait de café aqueux peu aromatique ayant une seconde teneur en acrylamide.

8. Procédé selon l'une quelconque revendication précédente, dans lequel la mise en contact de l'extrait de café aqueux peu aromatique avec une membrane sélectivement perméable comprend la filtration de l'extrait de café aqueux peu aromatique à travers une membrane sélectivement perméable par osmose inverse ou nanofiltration, de préférence dans lequel une pression allant jusqu'à 3 000 kPa, ou jusqu'à 4 000 kPa. est appliquée à la membrane pendant la filtration.

9. Procédé selon l'une quelconque revendication précédente, dans lequel la membrane sélectivement perméable est sélective pour l'acrylamide et les acides organiques.

10. Procédé selon l'une quelconque revendication précédente, dans lequel la membrane sélectivement perméable a une taille de pore comprise entre 0,1 et 10 nm.

11. Procédé selon l'une quelconque revendication précédente, dans lequel la membrane sélectivement perméable a un seuil de masse moléculaire de 200 Da, de préférence de 100 Da.

12. Procédé selon l'une quelconque revendication précédente, dans lequel la seconde teneur en acrylamide est inférieure d'au moins 10 %, d'au moins 20 %, d'au moins 30 %, d'au moins 40 %, d'au moins 50 %, d'au moins 60 %, d'au moins 70 %, d'au moins 80 %, d'au moins 90 %, d'au moins 95 %, d'au moins 99 % ou de 100 % à la première teneur en acrylamide.

13. Procédé selon l'une quelconque revendication précédente, comprenant en outre une étape de séchage du concentré de café liquide, produisant ainsi un produit de café soluble.

14. Utilisation d'une membrane sélectivement perméable pour réduire la teneur en acrylamide d'un concentré de café aqueux, dans laquelle la membrane sélectivement perméable est sélective pour l'acrylamide.

15. Utilisation d'une membrane sélectivement perméable pour réduire la teneur en acide organique d'un concentré de café aqueux, dans laquelle la membrane sélectivement perméable est sélective pour l'acide organique.
